# EUROPÄISCHE PATENTSCHRIFT

(11) **EP 1 240 976 B1**
(45) Veröffentlichungstag und Bekanntmachung des Hinweises auf die Patenterteilung: **19.05.2004**
(21) Anmeldenummer: 02405152.6
(22) Anmeldetag: 01.03.2002
(51) Int. Cl.: B23Q 11/00

(54) **Saugmodul**
Suction module
Module d'aspiration

(30) Priorität: 14.03.2001 DE 10112129
(43) Veröffentlichungstag der Anmeldung: 18.09.2002
(73) Patentinhaber: HILTI Aktiengesellschaft, 9494 Schaan (LI)
(72) Erfinder: Bongers-Ambrosius, Hans-Werner, 81477 München (DE); Popp, Franz, 86807 Buchloe (DE); Hruza, David, 88339 Bad Waldsee (DE); Britz, Rory, 86916 Kaufering (DE); Neuhäuser, Ralph, 86152 Augsburg (DE)
(74) Vertreter: Wildi, Roland

(56) Entgegenhaltungen:
- EP-A- 0 434 295
- DE-A- 2 534 169
- DE-A- 2 741 536
- DE-A- 3 516 099
- GB-A- 2 090 781
- US-A- 5 199 501
- US-A- 5 881 823

## Beschreibung

Die Erfindung bezeichnet ein Saugmodul für ein Elektrohandwerkzeuggerät wie einen Bohrhammer oder Meisselhammer.

Direkt am Gehäuse des Elektrohandwerkzeuggerätes befestigbare Saugmodule mit einem über einen Saugschlauch verbundenen, dem Werkzeug saugend zugeordneten, Saugkopf und einem entleerbaren Staubabscheider bilden mit dem Elektrohandwerkzeuggerät eine kompakte, handhabbare Einheit und sind somit insbesondere hinreichend robust für das Baugewerbe.

Die EP 0 434 295 beschreibt den nächstkommenden Stand der Technik gemäss dem Oberbegriff des Anspruchs 1, wobei ein abnehmbares Saugmodul für Bohrgeräte, bei dem das Modulgehäuse des Saugmoduls über einen elektrischen Kontaktstecker mit einer Stromversorgung des Bohrgerätes verbunden wird, sobald das Saugmodul an der zylinderförmigen Zusatzhandgriff-Aufnahme des Bohrgerätes befestigt wird.

Nach der US5199501 bildet ein an der Unterseite eines netzgespeisten Bohrhammers befestigbares Saugmodul mit diesem eine kompakte Einheit aus, wobei das Sauggebläse des Saugmoduls drehfest mit der Motorwelle des Bohrhammers verbunden ist.

Nach der GB2247852 weist ein unterhalb des Gehäuses eines netzgespeisten Bohrhammers montierbares Saugmodul ein längs der Werkzeugachse federnd vorgespanntes, bewegliches Saugrohr sowie ein Gebläse mit einem Gebläsemotor auf, welcher unabhängig vom Elektrohandwerkzeuggerät mit dem Stromnetz verbunden ist.

Nach der DE3516099 weist ein unterhalb des Gehäuses eines netzgespeisten Bohrhammers montierbares Staubmodul einen längs der Werkzeugachse federnd vorgespannten Saugkopf mit einem flexiblen Saugschlauch auf, wobei der Gebläsemotor. über eine Leitung stromleitend über den Motorschalter des Bohrhammers mit dem Stromnetz verbunden ist.

Nach der US5881823 weisen netzunabhängige Bohrhämmer unterhalb des Gehäuses über Führungsschienen montierbare Batteriemodule auf, welche über eine Akkumulatorkontaktpaarung stromleitend mit dem Bohrhammer verbunden sind.

DE 25 34 169 beschreibt ein Sauggebläse zum Entfernen von Bohrklein während des Bohrvorganges, das über den Ein/Ausschalter der Handbohrmaschine ein- und ausgeschaltet wird. Das Sauggebläse ist dabei entweder Bestandteil der Maschine oder lediglich durch einen Schlauch mit dieser verbunden.

Die GB 2 090 781 beschreibt eine Einrichtung zum Abdrehen von Bremsbelegen mit einer Staubabsaugvorrichtung zum absaugen von Staub, der beim Abdrehvorgang anfällt. Um die Ansaugwege dabei möglichst klein zu halten, ist die Staubabsaugvorrichtung dabei direkt auf dem Drehgestell angeordnet und rotiert mit diesem mit.

In US 5199 501 ist ein als Baueinheit ausgeformtes Saugmodul beschrieben, das lösbar mit einem Bohrgerät verbunden werden kann. Hierbei wird eine Lüfterwelle des Saugmoduls mechanisch mit einer Antriebswelle des Bohrgerätes gekoppelt.

Die Aufgabe der Erfindung besteht in der Realisierung eines Saugmoduls für ein netzunabhängiges Elektrohandwerkzeuggerät. Ein weiterer Aspekt besteht in einer kompakten Ausführung des um das Saugmodul erweiterten Elektrohandwerkzeuggerätes.

Die Aufgabe wird im wesentlichen durch die Merkmale des Anspruchs 1 gelöst. Vorteilhafte Weiterbildungen ergeben sich aus den Unteransprüchen.

Im wesentlichen weist ein Saugmodul für ein Elektrohandwerkzeuggerät ein über elektrische Leitungen mit einer Stromquelle verbindbares Modulgehäuse mit Befestigungsmitteln für die Montage unterhalb des restlichen Elektrohandwerkzeuggerätes und ein Sauggebläse mit einem Gebläsemotor zur Erzeugung eines Unterdrucks an einem Saugkopf auf, wobei das Modulgehäuse über eine Akkumulatorkontaktpaarung elektrisch mit dem Elektrohandwerkzeuggerät stromführend verbindbar ist und das Modulgehäuse zumindest teilweise in eine Akkumulatormodulaufnahme des Elektrohandwerkzeuggerätes einsetzbar sowie in dieser Lage über die Befestigungsmittel fixierbar ist.

Indem das Saugmodul statt eines Akkumulatormoduls in die Akkumulatormodulaufnahme des Elektrohandwerkzeuggerätes eingesetzt ist und dieses unter Zwischenschaltung des Saugmoduls mit der Stromquelle verbunden ist, ergibt sich eine kompakte Einheit eines netzunabhängigen Elektrohandwerkzeuggerätes mit einem Saugmodul. Die innerhalb der Leitungslänge zugeordnete Stromquelle in Form des entfernten Akkumulatormoduls wird vorteilhaft am Körper, bspw. am Gürtel, getragen. Alternativ dient als Stromquelle ein mit dem Stromnetz verbundener Netzadapter.

Vorteilhaft beinhaltet das Saugmodul eine mit der Akkumulatorkontaktpaarung und dem Gebläsemotor verbundene elektrische Steuereinheit mit einem Zeitgeber, welche das Saugmodul abhängig von der Betätigung eines im Griffbereich des Elektrohandwerkzeuggerätes angeordneten Motorschalters vor- und/oder nachlaufen lässt, wodurch während des Betriebes des Handwerkzeuggerätes stets ein Unterdruck zur Absaugung von abgetragenem Material erzeugt wird.

Vorteilhaft ist die elektrische Leitung des Saugmoduls über eine am Saugmodul fixierbare Stromquellenkontaktpaarung lösbar stromleitend verbunden, wodurch spezielle Stromquellen wie Gürtelakkumulatortaschen oder Netzadapter anschliessbar sind.

Vorteilhaft ist das Saugmodul neben dem Handwerkzeuggerät und dem Akkumulatormodul sowie einer Gürtelakkumulatortasche, zum Tragen des Akkumulatormoduls am Körper, als Teil eines zueinander bezüglich der Gehäuse, der Befestigungsmittel und der Kontaktpaarungen aufeinander abgestimmten Bausatzes ausgeführt, welchem weiter vorteilhaft zudem ein Netzadapter zugeordnet ist. Vorteilhaft ist ein entleerbarer Staubabscheider mit einem Staubabscheidmittel wie einen Filter als Teil des Staubmoduls lösbar verriegelbar unterhalb des Saugebläses mit dem Gebläsemotor befestigt und strömungseingangsseitig mit dem Saugschlauch luftdicht verbunden sowie intern strömungsausgangsseitig einseitig offen zum Sauggebläse ausgeführt, wodurch der Staubabscheider zur Entleerung einfach entriegelt werden kann, ohne das gesamte Staubmodul vom Handwerkzeuggerät zu lösen.

Alternativ vorteilhaft ist ein, weiter vorteilhaft zusätzlich an dem Elektrohandwerkzeuggerät festlegbarer, Saugvorsatz mit einem als Tiefenanschlag ausgebildeten Teleskoprohr sowie mit einem als Staubfilterkartusche ausgebildeten entleerbarer Staubabscheider mit einem Staubabscheidmittel wie einen Filter. Der Saugvorsatz ist als Teil des Staubmoduls lösbar verriegelbar am Modulgehäuse unterhalb des Saugebläses mit dem Gebläsemotor befestigt und strömungsausgangsseitig einseitig offen zum Modulgehäuse mit dem Sauggebläse ausgeführt, wodurch das Modulgehäuse mit dem Saugvorsatz eine kompakte Funktionseinheit ausbildet.

Die Erfindung wird bezüglich eines vorteilhaften Ausführungsbeispiels näher erläutert mit
Fig. 1 als Saugmodul eines Elektrohandwerkzeuggerätes
Fig. 2 als Variante

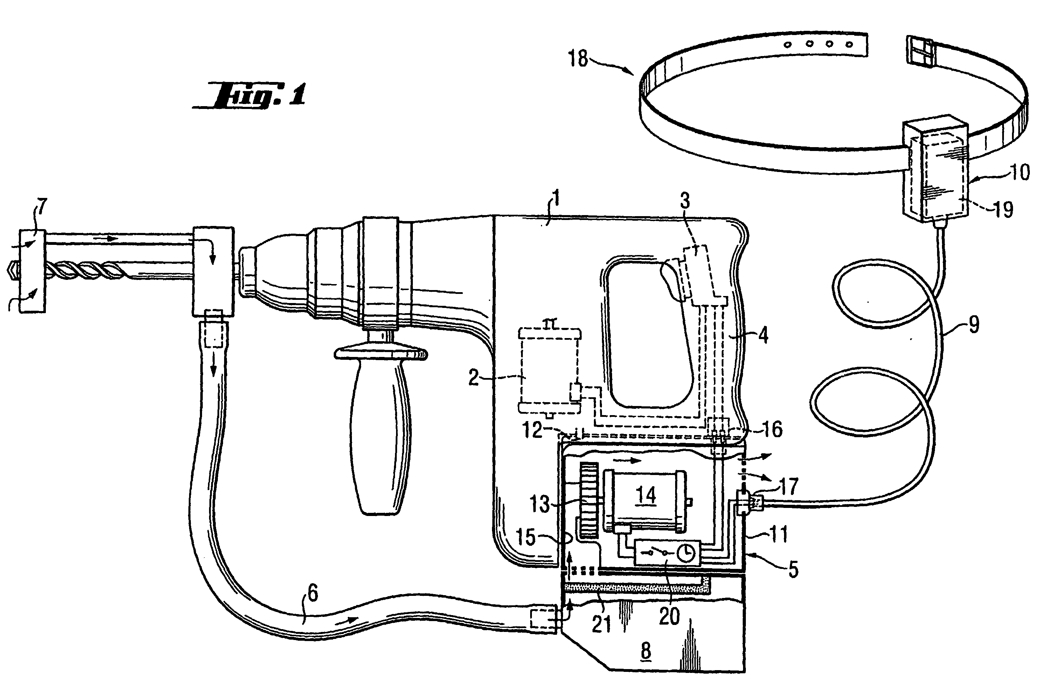

Nach Fig. 1 weist ein, mit einem als Bohrhammer ausgeführten Elektrohandwerkzeuggerät 1 mit einem Elektromotor 2 und einem Motorschalter 3 im Bereich eines Handgriffs 4 zu einer kompakten Einheit verbundenes, Saugmodul 5 einen über einen Saugschlauch 6 luftdicht verbundenen Saugkopf 7, welcher nahe eines Werkzeuges angeordnet ist, und einen entleerbaren Staubabscheider 8 auf. Innerhalb eines über elektrische Leitungen 9 mit einer Stromquelle 10 stromführend verbundenen Modulgehäuses 11, welches als Schwalbenschwanzführungsschienen und Verriegelungen ausgeführte Befestigungsmitteln 12 für die Montage unterhalb des Elektrohandwerkzeuggerätes 1 aufweist, ist ein Sauggebläse 13 mit einem Gebläsemotor 14 zur Erzeugung eines Unterdrucks im Saugkopf 7 angeordnet, wobei das Modulgehäuse 11 teilweise in eine Akkumulatormodulaufnahme 15 des Elektrohandwerkzeuggerätes 1 eingesetzt sowie in dieser Lage über die Befestigungsmittel 12 fixiert ist. Das Modulgehäuse 11 ist über eine Akkumulatorkontaktpaarung 16 über den Motorschalter 3 mit dem Elektromotor 2 des Elektrohandwerkzeuggerätes 1 sowie über eine Stromquellenkontaktpaarung 17 mit den elektrischen Leitungen 9 stromführend verbunden, welche mit einer in einer Gürtelakkumulatortasche 18 angeordneten, als zugeordnetes Akkumulatormodul 19 eines Bausatzes ausgeführten, Stromquelle 10 stromführend verbunden sind. Das Saugmodul 5 beinhaltet eine mit dem Gebläsemotor 14, der Akkumulatorkontaktpaarung 16 und der Stromquellenkontaktpaarung 17 verbundene elektrische Steuereinheit 20 mit einem integrierten elektrischen Zeitgeber und Leistungsschaltern. Der als Teil des Staubmoduls 5 lösbar verriegelbar unterhalb des Saugebläses 13 mit dem Gebläsemotor 14 befestigte, entleerbare Staubabscheider 8 mit einem Staubabscheidmittel 21 ist strömungseingangsseitig mit dem Saugschlauch 6 luftdicht verbunden sowie intern strömungsausgangsseitig einseitig offen zum Sauggebläse 13 ausgeführt.

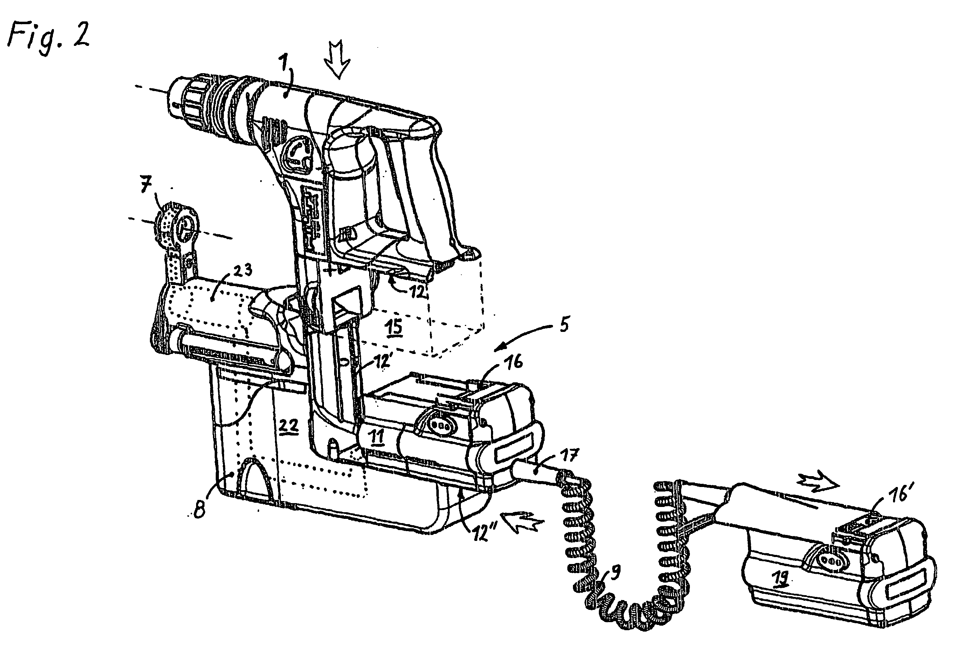

Nach Fig. 2 ist bei einem entsprechend der Darstellung modular montierbaren Staubmodul 5 das ursprünglich in der Akkumulatormodulaufnahme 15 des Elektrohandwerkzeuggerätes 1 eingesetzte, herausgenommene Akkumulatormodul 19 durch eine Akkumulatorkontaktpaarung 16' eines zugeordneten Adapters über die Leitung 9 und die Stromquellenkontaktpaarung 17 mit dem Staubmodul 5 und über die Akkumulatorkontaktpaarung 16 mit dem Elektrohandwerkzeuggerät 1 elektrisch verbindbar. Ein, über als Schwalbenschwanzführungsschienen ausgeführte Befestigungsmittel 12' an dem Elektrohandwerkzeuggerät 1 festlegbarer, Saugvorsatz 22 mit einem als Tiefenanschlag ausgebildeten Teleskoprohr 23 mit Saugkopf 7 sowie mit einem als Staubfilterkartusche ausgebildeten entleerbarer Staubabscheider 8 ist strömungsausgangsseitig einseitig offen zu dem Modulgehäuse 11 ausgeführt. Der Saugvorsatz 22 ist als Teil des Staubmoduls 5, über als Schwalbenschwanzführungsschienen ausgeführte Befestigungsmittel 12", einerseits lösbar verriegelbar unterhalb des Modulgehäuses 11 befestigbar, welches andererseits, über als Schwalbenschwanzführungsschienen ausgeführte Befestigungsmittel 12, teilweise in eine Akkumulatormodulaufnahme 15 des Elektrohandwerkzeuggerätes 1 einsetzbar ist, wodurch der Saugvorsatz 22 mit dem Elektrohandwerkzeuggerät 1 längs der Befestigungsmittel 12' verriegelbar ist.

## Patentansprüche

1. Saugmodul für ein Elektrohandwerkzeuggerät (1) mit einem über elektrische Leitungen (9) mit einer Stromquelle (10) verbindbaren Modulgehäuse (11) mit Befestigungsmitteln (12) für die Montage unterhalb des Elektrohandwerkzeuggerätes (1) und mit einem Sauggebläse (13) mit einem Gebläsemotor (14) zur Erzeugung eines Unterdrucks an einem Saugkopf (7), wobei das Modulgehäuse (11) über eine Kontaktpaarung (16) elektrisch mit dem Elektrohandwerkzeuggerät (1) stromführend verbindbar ist, **dadurch gekennzeichnet, dass** die Kontaktpaarung eine Akkumulatorkontaktpaarung ist, und das Modulgehäuse (11) zumindest teilweise in eine Akkumulatormodulaufnahme (15) des Elektrohandwerkzeuggerätes (1) einsetzbar sowie in dieser Lage über die Befestigungsmittel (12) fixierbar ist.

2. Saugmodul nach Anspruch 1, **dadurch gekennzeichnet, dass** das Saugmodul (11) eine mit der Akkumulatorkontaktpaarung (16) und dem Gebläsemotor (14) verbundene elektrische Steuereinheit (20) mit einem Zeitgeber beinhaltet, welche das Saugmodul (11) abhängig von der Betätigung eines im Bereich eines Handgriffs (4) des Elektrohandwerkzeuggerätes (1) angeordneten Motorschalters(3) vor- und/oder nachlaufen lässt.

3. Saugmodul nach Anspruch 1 oder Anspruch 2, **dadurch gekennzeichnet, dass** die elektrische Leitung (9) des Saugmoduls (11) über eine am Saugmodul (11) fixierbare Stromquellenkontaktpaarung (17) lösbar stromleitend verbunden ist.

4. Saugmodul nach einem der vorherigen Ansprüche, **dadurch gekennzeichnet, dass** das Saugmodul (11) neben dem Handwerkzeuggerät (1) und dem Akkumulatormodul (19) sowie einer Gürtelakkumulatortasche (18), zum Tragen des Akkumulatormoduls (19) am Körper, als Teil eines aufeinander abgestimmten Bausatzes ausgeführt ist.

5. Saugmodul nach Anspruch 4, **dadurch gekennzeichnet, dass** Teil des Bausatzes ein Netzadapter ist, der als alternative Stromquelle dient.

6. Saugmodul nach einem der vorherigen Ansprüche, **dadurch gekennzeichnet, dass** ein entleerbarer Staubabscheider (8) mit einem Staubabscheidmittel (21) als Teil des Staubmoduls (5) lösbar verriegelbar unterhalb des Sauggebläses (13) befestigt und strömungseingangsseitig mit dem Saugschlauch (6) luftdicht verbunden sowie intern strömungsausgangsseitig einseitig offen zum Sauggebläse (13) ausgeführt ist

7. Saugmodul nach einem der vorherigen Ansprüche, **dadurch gekennzeichnet, dass** als Teil des Staubmoduls (5) ein Saugvorsatz (22) lösbar verriegelbar am Modulgehäuse (11) befestigt und strömungsausgangsseitig einseitig offen zum Modulgehäuse (11) ausgeführt ist.

8. Saugmodul nach Anspruch 7, **dadurch gekennzeichnet, dass** der Saugvorsatz (22) ein Teleskoprohr (23) aufweist.

9. Saugmodul nach Anspruch 7 oder 8, **dadurch gekennzeichnet, dass** der Saugvorsatz (22) einen als Staubfilterkartusche ausgebildeten entleerbarer Staubabscheider (8) aufweist.

10. Saugmodul nach einem der Ansprüche 7 bis 9, **dadurch gekennzeichnet, dass** der Saugvorsatz (22) an dem Elektrohandwerkzeuggerät (1) festlegbar ist.

## Claims

1. Suction module for an electric hand tool (1), comprising a module housing (11) which is connectible via electrical wiring (9) to a power source (11) and which has mounting means (12) for assembly underneath an electric hand tool (1), and a suction blower (13) with a blower motor (14) for generating a negative pressure on a suction head (7), and the module housing (11) is via a contact pairing (16) in an electrically ducting manner linked to the electric hand tool (1), **characterised in that** the contact pairing is an accumulator contact pairing, and the module housing (11) is at least partially inserted into an accumulator module receptacle (15) of the electric hand tool (1) and fixed in this position via the fixing means (12).

2. Suction module according to Claim 1, **characterised in that** the suction module (11) includes an electric control unit (20) which is electrically connected to the accumulator contact pairing (16) and the blower motor (14), and with a timer, and this allows the suction model (11) to lead and/or trail in dependence of operation of a motor switch (3) arranged in the area of a handle (4) of the electric tool (1).

3. Suction module according to Claim 1 or Claim 2, **characterised in that** the electric wiring (9) of the suction module (11) is via a power supply contact pairing (17), which is fixable to the suction module (11), detachably connected in a conducting manner.

4. Suction module according to one of the above claims, **characterised in that** the suction module (11) is designed, along with the hand tool (1) and the accumulator module (19) as well as a belt accumulator carrier (18) for carrying the accumulator module (19) on the body, as a part of a matched assembly module.

5. Suction module according to Claim 4, **characterised in that** a part of the assembly module is a mains adaptor serving as alternative power supply.

6. Suction module according to one of the above claims, **characterised in that** an emptiable dust separator (8) is with a dust separating means (21) as part of a dust module (5) detachably sealable below the suction blower (13) and at the flow input airtight connected to the suction hose (6) and internally designed to be at the flow outlet singlesidedly open towards the suction blower (13).

7. Suction module according to one of the above claims, **characterised in that** as a part of the suction module (5) a pre-suction piece (22) is attached to the module housing (11) so as to be releasably sealable, and at the flow outlet side it is designed to be open towards the module housing (11).

8. Suction module according to Claim 7, **characterised in that** the pre-suction part (22) comprises a telescopic pipe (23).

9. Suction module according to Claim 7 or 8, **characterised in that** the pre-suction part (22) comprises a dust separator (8) designed as an emptiable dust filter cartridge.

10. Suction module according to one of Claims 7 to 9, **characterised in that** the pre-suction part (22) is fixed to the electric hand tool (1).

## Revendications

1. Module d'aspiration pour un outil manuel électrique (1) comportant un boîtier de module (11) pouvant être relié par des lignes électriques (9) à une source de courant (10) avec des moyens de fixation (12) pour le montage au-dessous de l'outil manuel électrique (1), et comportant un ventilateur aspirant (13) avec un moteur de ventilateur (14) pour produire une dépression sur une tête d'aspiration (7), le boîtier de module (11) pouvant être relié électriquement à l'outil manuel électrique (1), de manière à conduire le courant, par une paire de contacts (16), **caractérisé en ce que** la paire de contacts est une paire de contacts d'accumulateur, et **en ce que** le boîtier de module (11) peut être inséré, au moins en partie, dans un logement de module d'accumulateur (15) de l'outil manuel électrique (1), et peut être fixé dans cette position par les moyens de fixation (12).

2. Module d'aspiration selon la revendication 1, **caractérisé en ce que** le module d'aspiration (11) contient une unité de commande (20) électrique avec une horloge, reliée à la paire de contacts d'accumulateur (16) et au moteur de ventilateur (14), laquelle unité de commande fait fonctionner avec avance et/ou retard le module d'aspiration (11) en fonction de l'actionnement d'un interrupteur de démarrage (3) disposé dans la zone d'une poignée (4) de l'outil manuel électrique (1).

3. Module d'aspiration selon la revendication 1 ou la revendication 2, **caractérisé en ce que** la ligne électrique (9) du module d'aspiration (11) est reliée de manière à conduire le courant et de façon détachable par une paire de contacts de source de courant (17) qui peut être fixée au module d'aspiration (11).

4. Module d'aspiration selon l'une des revendications précédentes, **caractérisé en ce que** le module d'aspiration (11) est réalisé, en plus de l'outil manuel (1) et du module d'accumulateur (19) ainsi que d'une poche d'accumulateur pour ceinture (18), afin de porter sur soi le module d'accumulateur (19), comme partie d'un ensemble de pièces mutuellement adaptées.

5. Module d'aspiration selon la revendication 4, **caractérisé en ce qu'**une partie de l'ensemble de pièces est un adaptateur secteur qui sert de source de courant alternative.

6. Module d'aspiration selon l'une des revendications précédentes, **caractérisé en ce qu'**un séparateur de poussière (8) pouvant être vidé avec un agent de séparation de poussière (21), faisant partie du module de dépoussiérage (5), est fixé de manière verrouillable et détachable au-dessous du ventilateur d'aspiration (13) et est relié, de manière étanche à l'air, côté entrée au tuyau d'aspiration (6), et est réalisé à l'intérieur, côté sortie, ouvert d'un côté vers le ventilateur d'aspiration (13).

7. Module d'aspiration selon l'une des revendications précédentes, **caractérisé en ce qu'**en tant que partie du module de dépoussiérage (5), un accessoire d'aspiration (22) est fixé de manière verrouillable et détachable au boîtier de module (11) et, côté sortie, est réalisé ouvert d'un côté, vers le boîtier de module (11).

8. Module d'aspiration selon la revendication 7, **caractérisé en ce que** l'accessoire d'aspiration (22) comporte un tube télescopique (23).

9. Module d'aspiration selon la revendication 7 ou 8, **caractérisé en ce que** l'accessoire d'aspiration (22) comporte un séparateur de poussière (8) pouvant être vidé, réalisé comme cartouche de filtre à poussière.

10. Module d'aspiration selon l'une des revendications 7 à 9, **caractérisé en ce que** l'accessoire d'aspiration (22) peut être fixé à l'outil manuel électrique (1).
